# EUROPÄISCHE PATENTSCHRIFT

(11) **EP 1 614 530 B1**
(45) Veröffentlichungstag und Bekanntmachung des Hinweises auf die Patenterteilung: **24.04.2013**
(21) Anmeldenummer: 05013883.3
(22) Anmeldetag: 28.06.2005
(51) Int. Cl.: B32B 15/08, B32B 27/08, B32B 27/32, B32B 27/34, B32B 27/36

(54) **Verbundfolie sowie Verpackung, enthaltend diese Verbundfolie**
Laminated Multi-Layer Film and Packaging containing said Multi-Layer Film
Feuille composite et emballages contenant cette feuille

(30) Priorität: 06.07.2004 DE 202004010591 U
(43) Veröffentlichungstag der Anmeldung: 11.01.2006
(73) Patentinhaber: NITTEL GMBH & CO. KG, 65479 Raunheim/Main (DE)
(72) Erfinder: Nittel, Cornelius, 65193 Wiesbaden (DE)
(74) Vertreter: Metten, Karl-Heinz

(56) Entgegenhaltungen:
- EP-A- 0 154 428
- EP-A- 0 363 540
- EP-A- 1 231 053
- DE-A1- 1 504 792
- DE-A1- 19 953 971
- DE-U1- 20 201 655
- DE-U1- 20 217 344
- US-A- 4 216 268
- US-A- 5 589 275
- US-A- 5 968 663
- PATENT ABSTRACTS OF JAPAN Bd. 1996, Nr. 07, 31. Juli 1996 (1996-07-31) & JP 08 080977 A (DAINIPPON PRINTING CO LTD), 26. März 1996 (1996-03-26)
- DATABASE WPI Section Ch, Week 199131 Derwent Publications Ltd., London, GB; Class A35, AN 1991-227921 XP002342311 & JP 03 148418 A (SANSTAR GIKEN KK) 25. Juni 1991 (1991-06-25)

## Beschreibung

Die vorliegende Erfindung betrifft eine Verpackung für reaktive Hotmeltkleber, enthaltend Verbundfolien.

Verpackungsbehältnisse aus Kunststoff werden mittlerweile in nahezu sämtlichen Lebensbereichen eingesetzt. Flexible Kunststoffverpackungsbehältnisse haben regelmäßig über eine hohe Stabilität und eine gute Reißfestigkeit, insbesondere Nahtreißfestigkeit, zu verfügen. Ferner wird dem thermischen Verhalten solcher Verpackungsbehältnisse, insbesondere der Beibehaltung eines guten mechanischen Eigenschaftsprofils unter thermischer Beanspruchung, eine immer stärkere Bedeutung beigemessen. Gute, zuverlässige mechanische Eigenschaften bei hohen Temperaturen werden z. B. für Verpackungsgebinde benötigt, in die reaktive Hotmeltkleber im schmelzeflüssigen Zustand abgefüllt werden. Abfülltemperaturen bis zu 170°C sind hierbei nicht unüblich. Zudem werden erstarrte Hotmeltkleber üblicherweise durch flächiges Abreißen der Verbundfolien des Verpackungsmaterials unmittelbar vor ihrer jeweiligen Weiterverwendung bereitgestellt. Das Verpackungsmaterial hat demzufolge einerseits gute mechanische Eigenschaften bei hohen Temperaturen aufzuweisen, um ein einwandfreies und dichtes Befüllen zu gewährleisten, sowie andererseits über eine geringe Weiterreißfestigkeit zu verfügen, sobald erst einmal eingerissen. Außerdem muss sichergestellt sein, dass bei einem vollflächigen Abreißen keine größeren Rückstände an der Hotmeltkleberaußenseite haften bleiben. Herkömmliche Hotmeltkleber basieren im allgemeinen auf Harzen, Wachsen, Thermoplasten oder Elastomeren und können Zusätze an Füllstoffen, Antioxidantien oder Gleitmitteln enthalten und stellen in der Regel feste, viscoelastische oder viscoplastische Werkstoffe dar, die beim Erwärmen in zäh- bis dünnflüssige Schmelzen übergehen. Beispielhaft seien Polyurethan-Schmelzkleber genannt, die üblicherweise bei Temperaturen von etwa 130°C bis 150°C verarbeitet bzw. umgefüllt werden. Um obigen Anforderungen zu genügen, sind bereits unterschiedlichste Verbundfoliensysteme entwickelt worden.

In der DE 202 17 344 U1 wird eine Hotmeltkleber-Verpackung, bestehend aus zumindest einer Verbundfolie, vorgeschlagen, die aus zwei Kunststofflagen als Außenseiten sowie einer zwischenliegenden, mit den beiden Kunststoffaußenlagen verbundenen Metalllage besteht. Für die Bodenfläche ist eine Verbundfolie zu wählen, deren beide Kunststoffaußenlagen aus Polypropylen bestehen, während für die Mantelfläche eine Verbundfolie bevorzugt ist mit einer Polyethylenterephthalatfolie auf der Außenseite und einer Polypropylenfolie auf der Innenseite und mit einer dazwischenliegenden Aluminiumfolie. Dieser Aufbau ist sehr komplex und erfordert den Einsatz hochpreisigen Polyethylenterephthalats.

Gemäß der DE 697 13 661 T2 gehen Verbundfolien mit feuchtigkeitssperrenden Eigenschaften auf mit Vinylidenchlorid beschichtete Systeme, wie biaxial gestrecktes Polypropylen/Aluminiumfolie/Polyethylen, zurück. Der Einsatz einer Vinylidenchlorid-Beschichtung unter Verwendung einer Aluminiumzwischenfolie führt zu einem komplexen und kostenintensiven Herstellungsverfahren.

Der DE 199 15 311 A1 ist eine Mehrschichtkunststofffolie zur Umhüllung einer mikroporösen Platte zu entnehmen, umfassend eine Polyolefinheißsiegelschicht, z. B. eine Polyethylenschicht, eine Gasbarriereschicht aus Polyvinylalkohol oder Ethylenvinylalcohol-Copolymer oder Polyamid, eine Polyolefinschicht, z. B. aus Polyethylen oder Polypropylen, und eine mit Aluminium bedampfte Polyester- oder Polypropylenschicht. Benachbarte Schichten sind durch zwischengelegte Klebe- oder Verbindungsschichten miteinander verbunden.

Aus der DE 196 23 751 A1 geht eine Verbundfolie mit einer Außenfolie aus gerecktem Polyester oder Polyamid, einer Innenfolie aus gerecktem Polyethylen oder Polypropylen und einer dazwischenliegenden Barriereschicht, enthaltend Aluminiumoxid, hervor. Die erhaltenen flexiblen Verbundfolien eignen sich insbesondere für sauerstoff- und/oder wasserdampfempfindliches Verpackungsgut.

In der DE 296 17 482 U 1 wird schließlich ein Deckel enthaltend eine Lage aus Papier, die an einer Lage aus thermoplastischem Material anhaftet, sowie eine Heißkleberlage offenbart. Die Lage aus thermoplastischem Material umfasst eine Lage aus orientiertem Polypropylen, die gegebenenfalls auch metallisiert sein kann, und eine Heißkleberschicht.

Trotz der Vielzahl an für Verpackungen verwendeten Verbundfoliensystemen sind insbesondere für thermisch anspruchsvolle Aufgaben noch stets verbesserte Verpackungsgebinde vonnöten. Dieses betrifft sowohl die mechanischen als auch die thermischen Eigenschaften. Bei vielen flexiblen Kunststoffgebinden auf der Basis von Verbundfolien haben sich insbesondere die Falznähte als Schwachstellen erwiesen. Denn vor allem bei größeren Gebinden kommt nicht mehr nur eine einstückige Verbundfolie zum Einsatz, vielmehr werden für Boden- und Mantelfläche separate Verbundfolien eingesetzt, die entlang einer Verbindungsnaht miteinander zu kombinieren sind. Da bekanntermaßen nicht-identische thermoplastische Kunststoffe nur ausnahmsweise eine homogene Mischschmelze ausbilden, ist bei der Herstellung einer Verbindungsnaht zwischen Boden- und Mantelfläche eines Verpackungsgebindes in konstruktionstechnischer wie auch werkstofftechnischer Hinsicht besondere Sorgfalt anzuwenden. Beispielsweise ist bei den in der DE 202 17 344 U1 beschriebenen Hotmeltkleber-Verpackungen stets darauf zu achten, dass, da das PP/AI/PP-Verbundfoliensystem der Bodenfläche im allgemeinen nach innen eingelegt wird, die Polypropylenschicht die Innenseite der Mantelfläche bildet. Mangelnde Sorgfalt beim Herstellungsprozess führt somit regelmäßig zu einem nicht geringen Anteil an Ausschussware.

Aus DE 202 01 655 U1 geht eine Verpackung zur Heißabfüllung von reaktiven Produkten mit einem Boden sowie mit einem mit dem Boden verbundenen Mantel hervor, wobei der Boden aus einer Verbundfolie gebildet ist mit zwei äußeren Polypropylenfolienlagen und einer dazwischen liegenden Aluminiumfolienlage und der Mantel gebildet ist aus einer Verbundfolie mit einer Polypropylen- und einer Polyethylenterephthalataußenlage und einer dazwischen liegenden Aluminiumfolienlage. Derartige Verpackungen sollen hinreichend hitzebeständig sein und das Abfüllen von Hotmeltklebem erlauben sowie gleichzeitig über hohe Flexibilität verfügen.

Die DE 1 504 792 OS betrifft eine mindestens dreischichtige Verpackungsfolie, bei der als Mittellage eine dünne Aluminiumfolie vorgesehen ist, die beidseitig mit einer thermoplastischen Kunststofffolie kaschiert ist. Mindestens eine der thermoplastischen Kunststofffolien hat eine biaxial verstreckte Polyolefinfolie zu sein. Aus derartigen Verbundfolien sollen sich mittels Heißversiegelns röhrenförmige Verpackungsformen herstellen lassen, die sich durch ein hohes Maß an Dichtigkeit auszeichnen.

Der vorliegenden Erfindung lag daher die Aufgabe zugrunde, die Nachteile der Verpackungssysteme auf der Basis von Verbundfolien zu umgehen, sowie insbesondere Verpackungen zur Verfügung zu stellen, die thermisch robust sind, bei hoher thermischer Beanspruchung ihr gutes mechanisches Eigenschaftsprofil nicht verlieren, eine sehr gute Bindenahtfestigkeit aufweisen und/oder gleichwohl unkompliziert herzustellen sind.

Demgemäß wurde eine Verpackung für Hotmeltkleber gemäß den Mekmalen des Patentanspruchs 1 gefunden.

In bevorzugten Ausgestaltungen der Verbundfolie stellt die erste Lage die Trägerschicht dar. Im Sinne der vorliegenden Erfindung sollen Polymer- bzw. Polyolefinfilme ebenfalls Polymer- bzw. Polyolefinfolien umfassen. Ferner soll eine Metallschicht auch eine Metallbeschichtung, z.B. eine aufgedampfte Metallbeschichtung, umfassen.

Als besonders vorteilhaft, insbesondere im Hinblick auf das angestrebte Zusammenspiel an mechanischer und thermischer Stabilität, haben sich solche Verbundfolien erwiesen, bei denen die zweite Lage zwischen der ersten und der dritten Lage vorliegt.

Die Verbundfolie kann mit Hilfe üblicher Verfahren z. B. mittels Kaschierung, Thermobonding, Ultraschallverschweißens oder Extrusionsbeschichtung hergestellt werden. In der bevorzugten Ausgestaltung wird die Verbundfolie erhalten über Kleb- oder Extrusionskaschierungen. In einer bevorzugten Ausgestaltung ist die Kaschierung gegenüber Lösungsmitteln, wie Aluole oder Toluol, beständig. Es können sowohl lösemittelfreie als auch lösemittelhaltige Kaschierkleber verwendet werden.

Orientierte Polymerfilme bzw. -folien sind im allgemeinen durch uni- oder biaxiales Recken der Folien zugänglich. Hierbei findet eine räumliche Orientierung der Polymerketten in der Polymerfolie statt. Bei orientierten Polypropylenfilmen sind die Abkürzungen oPP für orientiertes Polyproylen und BOPP für biaxial orientiertes Polypropylen gebräuchlich. Orientierte Polymerfolien, wie z. B. orientiertes Polypropylen oder biaxial orientiertes Polypropylen sind hinlänglich bekannt und ohne weiteres kommerziell erhältlich. Im vorliegenden Fall soll das orientierte Polypropylen monoaxial wie auch biaxial orientiertes Polypropylen umfassen.

Gemäß einer Weiterentwicklung ist vorgesehen, dass die Verbundfolie ferner mindestens eine vierte Lage, enthaltend einen Polyimid- oder Polyamidfilm, umfasst.

Geeignete Polyamide umfassen aliphatische Polyamide wie Polyamid-6 oder Copolyamide, insbesondere solche mit einem überwiegenden Anteil an Caprolactam. Diese Polyamide können alleine oder als Polymermischung untereinander oder als Polymermischung mit anderen Polymeren, wie z. B. aromatischen Polyamiden, Polyethylen, Polyethylencopolymeren, Polypropylen, Polypropylencopolymeren und/oder Polyestern verarbeitet werden.

Aufgrund ihrer höheren Temperaturbeständlichkeit sind orientierte Folien auf der Basis von Polyamid-66 und Polyamid-6/6T besonders geeignet.

Eine besonders geeignete Ausführungsform zeichnet sich dabei dadurch aus, dass der orientierte Polymerfilm der ersten und/oder dritten Lage einen orientierten Polypropylen (oPP)-Film umfasst.

Dabei kann vorgesehen sein, dass der orientierte Polymerfilm monoaxial orientiert, insbesondere biaxial orientiert ist.

Besonders bevorzugt wird auf solche Verbundfolien zurückgegriffen, bei denen der orientierte Polypropylenfilm und/oder der cast-Polypropylenfilm isotaktisches, syndiotaktisches und/oder ataktisches Polypropylen umfasst bzw. umfassen. Selbstverständlich können auch unterschiedliche Polypropylen-Typen in beliebiger Kombination eingesetzt werden.

Geeignete Verbundfolien sind ferner dadurch charakterisiert, dass der orientierte Polypropylenfilm und/oder der cast-Polypropylenfilm Copolymere, insbesondere Blockcopolymere, umfasst.

Geeignete erste und dritte Lagen der Verbundfolie basieren beispielsweise auf Propylenhomopolymeren und/oder auf Propylencopolymeren. Geeignete Propylenhomopolymere verfügen über Molmassen (basierend auf dem Gewichtsmittel) M_{w} im Bereich von etwa 500.000 bis 1,5 Mio. g/mol sowie, bezogen auf das Zahlenmittel, über Molmassen Mₙ im Bereich von etwa 25.000 bis 100.000 g/mol. Derartige Propylenhomopolymere lassen sich z. B. mittels Ziegler-Natta-Katalyse oder in Gegenwart von Metallocenkatalysatoren herstellen. Geeignete Propylencopolymere weisen neben Propylen als Hauptkomponente ein oder mehrere Comonomere, z. B. Ethylen und/oder α-Olefine mit 4 bis 18 C-Atomen, auf. Besonders bevorzugt sind Propylen/Ethylen-Copolymere. Unter diesen Propylencopolymeren seien exemplarisch statistische Copolymere, Propylenblockcopolymere; statistische Propylenblockcopolymere und elastomere Polypropylene genannt. Besonders bevorzugt wird auf Propylenblockcopolymere zurückgegriffen. Geeignete Copolymere des Propylens können überdies polare Comonomere, beispielsweise (Meth)acrylate umfassen. Selbstverständlich können auch Kombinationen unterschiedlicher Polypropylene, z.B. solche mit unterschiedlicher Weichheit und unterschiedlichem Schmelzindex verwendet werden. In diesem Zusammenhang seien z.B. auch Mischungen aus einem weichen Propylenblockpolymeren mit einem Polypropylenhomopolymer oder einem harten Propylenblockcopolymer genannt. Hervorgehoben seien ebenfalls statische Propylencopolymere mit einem Anteil an Ethylenmonomeren im Bereich von 2 bis 10 Gew. %, insbesondere im Bereich von 4 bis 7 Gew. %, sowie Propylenblockcopolymere mit einem Anteil an Ethylenmonomeren im Bereich von etwa 2 bis 30 Gew. %, insbesondere im Bereich von 2 bis 20 Gew. %.

Sofern nicht ausdrücklich anderslautend beschrieben, sollen im Sinne der vorliegenden Erfindung unter Polypropylene sowohl homopolymere wie auch copolymere Polypropylene verstanden werden.

Polypropylenhomo- und -copolymere können mit üblichen Zusatzstoffen versehen sein, beispielsweise mit Antioxidantien, Verarbeitungshilfsmitteln, Stabilisatoren, Füllstoffen, Antistatika und/oder Nukleierungsmitteln.

Cast-Polypropylen kann z. B. mit Hilfe einer Cast-Folienanlage, bestehend aus einem Plastifizier-Extruder mit Breitschlitzdüse, in geschmolzenem Zustand direkt auf das Verbundfolienvorprodukt oder z.B. die zweite Lage aufextrudiert werden. Üblicherweise wird das cast-Polypropylen auf eine gekühlte Rolle bzw. Walze aufgetragen.

Die zweite Lage umfasst eine Aluminiumschicht und/oder -folie.

Des weiteren kommen solche Verbundfolien in Betracht, deren erste und dritte Lagen jeweils mindestens einen orientierten Polypropylenfilm umfassen. Vorzugsweise ist zwischen diesen beiden Lagen eine Aluminiumschicht als zweite Lage angeordnet. Ferner kann auch auf solche Verbundfolien zurückgegriffen werden, bei denen die erste und dritte Lage auf cast-Polypropylenfilmen basieren. Auch zwischen diesen ersten und dritten Lagen ist vorzugsweise eine Aluminiumschicht als zweite Lage angeordnet.

In einer weiteren Ausgestaltung ist vorgesehen, dass die vierte Lage zwischen der ersten und der zweiten Lage, zwischen der zweiten und der dritten Lage und/oder zwischen der ersten und dritten Lage vorliegt.

Als besonders bevorzugt haben sich ferner solche Verbundfolien erwiesen, bei denen die Erweicherungstemperatur der ersten, dritten und/oder vierten Lage nach Vicat A/50 (ISO 306) im Bereich von 120°C bis 270°C, insbesondere im Bereich von 130°C bis 250°C, liegt.

Von besonderem Vorteil ist ferner, dass Verbundfolien zugänglich sind, bei denen die Warmnahtverbundhaftung zweier benachbarter Lagen bei 70°C nicht weniger als 1,5 N, insbesondere nicht weniger als 2,5 N beträgt.

Für die Bestimmung der Warmnahtverbundhaftung bei 70°C wird vorzugsweise auf etwa 15 mm breite Streifen zurückgegriffen, die aus der Verbundfolie in Längsrichtung zur Folienbahn, z.B. mittels eines Streifenschneiders, ausgeschnitten werden können. Nach Auftrennung der Verbundfolie, insbesondere an einem der Querseiten des Streifens, vorzugsweise von zweiter und dritter Lage, werden diese Lagen in die Klemmbacken einer Zugprüfmaschine, z.B. Instron 4301, eingespannt. Vorzugsweise handelt es sich bei den einzuspannenden Lagen um die Metallfolie einerseits und den benachbarten cast-Polyolefinfilm andererseits. Nach Wärmebehandlung des eingeklemmten Streifens in einer Wärmekammer bei 70°C, z.B. für eine Minute, z.B. in der Wärmekammer Instron 3111, werden die Klemmbacken in einem Winkel von 90° mit einer Geschwindigkeit von 500 mm/min voneinander wegbewegt. Hierbei wird die Kraft gemessen die erforderlich ist, um die dritte Lage von der zweiten Lage zu trennen. Insbesondere wenn die aufzubringende Kraft, bezogen auf einen 15 mm breiten Teststreifen, größer als 2,5 N beträgt, ist gefunden worden, daß sich die Verbundfolie ohne weiteres von einem an der dritten Lage anliegenden, erstarrten Hotmeltkleber trennen läßt, ohne daß Rückstände an dem Hotmeltkleber verbleiben.

Die Gesamtdicke der Verbundfolie liegt üblicherweise im Bereich von etwa 30 bis 200 µm, vorzugsweise im Bereich von etwa 50 bis 190 µm und besonders bevorzugt im Bereich von etwa 70 bis 175 µm. Die Dicke der ersten Lage liegt dabei vorzugsweise im Bereich von etwa 5 bis 50 µm, vorzugsweise im Bereich von etwa 10 bis 30 µm. Die Dicke der zweiten Lage liegt vorzugsweise im Bereich von etwa 3 bis 30 µm, vorzugsweise im Bereich von 5 bis 15 µm. Die Dicke der dritten Lage liegt vorzugsweise im Bereich von etwa 10 bis 150 µm, vorzugsweise im Bereich von etwa 30 bis 175 µm und besonders bevorzugt im Bereich von etwa 45 bis 110 µm. Und die Dicke der vierten Lage liegt vorzugsweise im Bereich von etwa 5 bis 60 µm, vorzugsweise im Bereich von etwa 10 bis 45 µm. Selbstverständlich ist es ohne weiteres möglich, dass sämtliche Kunststofflagen in ihren jeweiligen Dicken im Bereich von 5 bis 150 µm variieren. In einer besonders bevorzugten Ausführungsform verfügt die erste Lage, insbesondere eine oPP- oder BOPP-Folie, über eine Dicke von etwa 20 µm, die zweite Lage, insbesondere eine Al-Folie, über eine Dicke von etwa 7 µm und die dritte Lage, insbesondere cast-Polypropylen oder copolymeres Polypropylen, über eine Dicke von etwa 60 µm.

Bei den erfindungsgemäßen Verpackungen ist die dritte Lage der Verbundfolie der Mantelfläche dem Inneren der Verpackung zugewandt oder zuwendbar.

Die Verbundfolie zeichnet sich durch eine besonders gute mechanische Stabilität auch bei hohen Temperaturen, z. B. oberhalb von 100°C aus, was sich beispielsweise in einem erhöhten Erweichungspunkt gemäß Vicat A/50 niederschlägt. Neben einer ausgeprägten Hitzebeständigkeit zeichnen sich die Verbundfolien durch eine verbesserte Festigkeit, insbesondere eine verbesserte Reißfestigkeit, aus. Gleichwohl ist es ohne weiteres möglich, die Verbundfolien als Bestandteil einer Verpackung für z. B. Hotmeltkleber großflächig von dem in der Verpackung erstarrten Hotmeltkleber abzureißen, ohne dass irgendwelche Rückstände verbleiben. Von besonderem Vorteil ist weiterhin, dass das Verbundfolienmaterial trotz seiner gesteigerten Festigkeit sehr geschmeidig ist, wodurch sich eine verbesserte knickbrucharme Fertigung wie auch eine gute Anpassung des Folienmaterials, wenn z. B. als Inliner eingesetzt, an die Geometrie des Außengebindes erzielen lässt.

Von besonderem Vorteil bei den erfindungsgemäßen Hotmeltkleber-Verpackungen ist auch, dass in einer bevorzugten Ausgestaltung die Verbundfoliensysteme von Mantel- und Bodenfläche innenwie außenseitig auf Polyolefinen, insbesondere auf Polypropylen, basieren, weshalb bei der relativen Anordnung von Mantelflächenverbundfolie und Bodenflächenverbundfolie keine besondere Sorgfalt zu treffen ist. Allerdings sind solche Verpackungen bevorzugt, bei denen die dritte Lage aus cast-Polyolefinen, insbesondere cast-Polypropylen, dem Inneren der Verpackung zugewandt ist, d.h. die Innenseite der Verpackung bildet. Schließlich lassen sich die erfindungsgemäßen Verpackungen besonders kostengünstig herstellen.

Weitere Merkmale der Verbundfolie sowie der aus dieser Verbundfolie gefertigten Verpackung ergeben sich aus der nachfolgenden Beschreibung, in der ein Ausführungsbeispiel anhand einer schematischen Zeichnung im Einzelnen erläutert wird. Dabei zeigt diese Abbildung eine schematische Querschnittsansicht einer erfindungsgemäßen Verpackung.

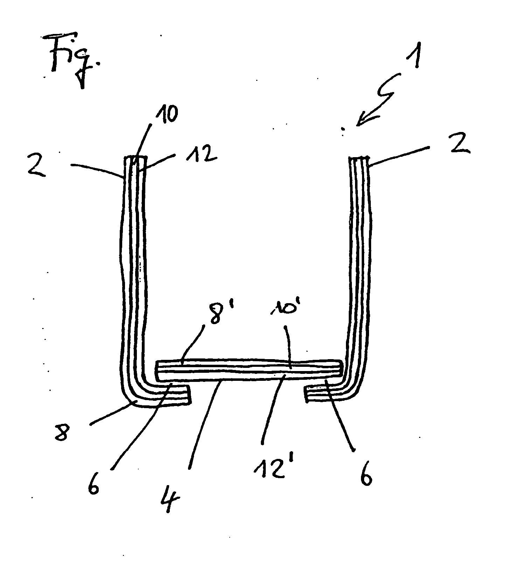

Die einzige Figur zeigt eine Verpackung 1 mit einer Mantelfläche 2 und einer Bodenfläche 4. Mantel- sowie Bodenfläche umfassen jeweils eine Verbundfolie. Die Mantelfläche 2 kann aus ein oder mehreren solchen Verbundfolien zusammengesetzt sein. Bevorzugt ist die Mantelfläche 2 einstückig ausgeführt. In der abgebildeten Figur verfügen die Mantel- und die Bodenfläche jeweils über einen gleichartigen Aufbau ihrer Verbundfolien. In beiden Fällen handelt es sich um dreilagige Verbundfolien mit einer ersten Lage 8 aus einer orientierten Polypropylenfolie als Trägerfolie, einer zweiten Lage 10 in Form einer Aluminiumfolie und einer dritten Lage 12 aus einem cast-Polypropylenfilm, insbesondere enthaltend etwa 5 Gew. % an einpolymerisierten Ethylenmonomereinheiten. Die dritte Lage 12 der Mantelflächenverbundfolie aus cast-Polypropylen ist dem Inneren der Verpackung zugewandt. In der dargestellten Ausführungsform wird die Verbundfolie der Bodenfläche 4 jeweils derart ausgerichtet, dass, wenn, wie abgebildet, die unteren Enden der Verbundfolie der Mantelfläche 2 nach innen geschlagen werden, die Lage 12' aus cast-Polypropylen der Bodenfläche 4 auf dem cast-Polypropylenfilm 12 der Mantelfläche 2 zu liegen kommt. Demgemäß bildet die dritte Lage 12' der Verbundfolie der Bodenfläche 4 die Unterseite, und die erste Lage 8', umfassend einen orientierten Polypropylenfilm ist dem Inneren der Verpackung zugewandt. Durch Beaufschlagung mit Druck und Wärme kann in dem Überlappungsbereich 6 von Mantel- und Bodenfläche eine dauerhafte dichte Anbindung erzielt werden.

Die in der voranstehenden Beschreibung, in den Ansprüchen sowie die in der Zeichnung offenbarten Merkmale der Erfindung können sowohl einzeln als auch in jeder beliebigen Kombination für die Verwirklichung der Erfindung in ihren verschiedenen Ausführungsformen wesentlich sein.

## Patentansprüche

1. Verpackung für reaktive Hotmeltkleber, umfassend wenigstens eine Mantelfläche und eine Bodenfläche, die zumindest bereichsweise kontinuierlich ineinander übergehen oder zumindest bereichsweise miteinander verbunden oder verbindbar sind, wobei zumindest eine Mantelfläche sowie die Bodenfläche jeweils aus einer Verbundfolie gebildet sind, **dadurch gekennzeichnet, dass** die Verbundfolie der Mantelfläche mindestens eine erste Lage, enthaltend einen orientierten Polypropylenfilm, mindestens eine zweite Lage, enthaltend eine Aluminiumfolie, und mindestens eine dritte Lage, enthaltend einen Cast-Polypropylenfilm, umfasst, wobei die zweite Lage zwischen der ersten und der dritten Lage angeordnet ist, dass die Verbundfolie der Bodenfläche mindestens eine erste Lage, enthaltend einen orientierten Polypropylenfilm, mindestens eine zweite Lage, enthaltend eine Aluminiumfolie, und mindestens eine dritte Lage, enthaltend einen Cast-Polypropylenfilm, umfasst, wobei die zweite Lage zwischen der ersten und der dritten Lage angeordnet ist, dass die dritte Lage der Verbundfolie der Mantelfläche dem Inneren der Verpackung zugewandt und die dritte Lage der Verbundfolie der Bodenfläche dem Äußeren der Verpackung zugewandt sind, wobei diese dritten Lagen der Verbundfolien von Mantel- und Bodenfläche entlang eines umlaufenden Überlappungsbereichs dichtend miteinander verbunden sind und wobei die erste Lage der Verbundfolie der Mantelfläche und die dritte Lage der Verbundfolie der Bodenfläche Außenlagen darstellen; oder
umfassend wenigstens eine Mantelfläche und eine Bodenfläche, die zumindest bereichsweise kontinuierlich ineinander übergehen oder zumindest bereichsweise miteinander verbunden oder verbindbar sind, wobei zumindest eine Mantelfläche sowie die Bodenfläche jeweils aus einer Verbundfolie gebildet sind, **dadurch gekennzeichnet, dass** die Verbundfolie der Mantelfläche mindestens eine erste Lage, enthaltend einen orientierten Polypropylenfilm, mindestens eine zweite Lage, enthaltend eine Aluminiumfolie, und mindestens eine dritte Lage, enthaltend einen Cast-Polypropylenfilm, umfasst, wobei die zweite Lage zwischen der ersten und der dritten Lage angeordnet ist, dass die Verbundfolie der Bodenfläche mindestens eine erste Lage, enthaltend einen Cast-Polypropylenfilm, mindestens eine zweite Lage, enthaltend eine Aluminiumfolie, und mindestens eine dritte Lage, enthaltend einen Cast-Polypropylenfilm, umfasst, wobei die zweite Lage zwischen der ersten und der dritten Lage angeordnet ist, dass die dritte Lage der Verbundfolie der Mantelfläche dem Inneren der Verpackung zugewandt und die dritte Lage der Verbundfolie der Bodenfläche dem Äußeren der Verpackung zugewandt sind, wobei diese dritten Lagen der Verbundfolien von Mantel- und Bodenfläche entlang eines umlaufenden Überlappungsbereichs dichtend miteinander verbunden sind und wobei die erste Lage der Verbundfolie der Mantelfläche und die dritte Lage der Verbundfolie der Bodenfläche Außenlagen darstellen.

2. Verpackung nach Anspruch 1, **dadurch gekennzeichnet, dass** die Verbundfolie von Mantelfläche oder Bodenfläche mindestens eine vierte Lage, enthaltend einen Polyamid- und/oder einen Polyimidfilm umfassen.

3. Verpackung nach Anspruch 1 oder 2, **dadurch gekennzeichnet, dass** der orientierte Polymerfilm der Verbundfolie der Mantelfläche oder der Bodenfläche monoaxial oder biaxial orientiert sind.

4. Verpackung nach einem der vorangehenden Ansprüche, **dadurch gekennzeichnet, dass** der orientierte Polypropylenfilm oder der Cast-Polypropylenfilm der Verbundfolie der Mantelfläche oder der Bodenfläche isotaktisches, syndiotaktisches oder ataktisches Polypropylen umfassen.

5. Verpackung nach einem der vorangehenden Ansprüche, **dadurch gekennzeichnet, dass** der orientierte Polypropylenfilm oder der Cast-Polypropylenfilm der Verbundfolie der Mantelfläche oder der Bodenfläche Copolymere oder Blockcopolymere umfassen.

6. Verpackung nach einem der vorangehenden Ansprüche, **dadurch gekennzeichnet, dass** die Erweichungstemperatur der ersten, dritten oder vierten Lage der Verbundfolie der Mantelfläche oder der Bodenfläche nach Vicat A 50 (ISO 306) im Bereich von 120°C bis 207°C liegen.

## Claims

1. A packaging for reactive hot-melt adhesives, comprising at least one lateral area and a bottom area which merge into each other continuously at least in sections or which are joined or may be joined together at least in sections, wherein at least one lateral area as well as the bottom area are formed from a laminated multi-layer foil, **characterized in that** the laminated multi-layer foil of the lateral area comprises at least one first layer comprising an oriented polypropylene film, at least one second layer comprising an aluminum foil, and at least one third layer comprising a cast polypropylene film, wherein the second layer is arranged between the first and the third layer; that the laminated multi-layer foil of the bottom area comprises at least one first layer comprising an oriented polypropylene film, at least one second layer comprising an aluminum foil, and at least one third layer comprising a cast polypropylene film, wherein the second layer is arranged between the first and the third layer; that the third layer of the laminated multi-layer foil of the lateral area is facing the inside of the packaging and the third layer of the laminated multi-layer foil of the bottom area is facing the outside of the packaging, wherein said third layers of the laminated multi-layer foils of the lateral and bottom areas are joined together sealingly along a circumferential overlap area and wherein the first layer of the laminated multi-layer foil of the lateral area and the third layer of the laminated multi-layer foil of the bottom area are outside layers; or
comprising at least one lateral area and a bottom area which merge into each other continuously at least in sections or are joined or may be joined together at least in sections, wherein at least one lateral area as well as the bottom area are formed from a laminated multi-layer foil, **characterized in that** the laminated multi-layer foil of the lateral area comprises at least one first layer comprising an oriented polypropylene film, at least one second layer comprising an aluminum foil, and at least one third layer including a cast polypropylene film, wherein the second layer is arranged between the first and the third layer; that the laminated multi-layer foil of the bottom area comprises at least one first layer including a cast polypropylene film, at least one second layer comprising an aluminum foil, and at least one third layer comprising a cast polypropylene film, wherein the second layer is arranged between the first and the third layer; that the third layer of the laminated multi-layer foil of the lateral area is facing the inside of the packaging and the third layer of the laminated multi-layer foil of the bottom area is facing the outside of the packaging, wherein said third layers of the laminated multi-layer foils of the lateral and bottom areas are joined together sealingly along a circumferential overlap area and wherein the first layer of the laminated multi-layer foil of the lateral area and the third layer of the laminated multi-layer foil of the bottom area are outside layers.

2. A packaging according to claim 1, **characterized in that** the laminated multi-layer foil of the lateral area or the bottom area comprises at least one fourth layer including a polyamide and/or a polyimide film.

3. A packaging according to claim 1 or 2, **characterized in that** the oriented polymer film of the laminated multi-layer foil of the lateral area or the bottom area is mono-axially or bi-axially oriented.

4. A packaging according to any one of the preceding claims, **characterized in that** the oriented polypropylene film or the cast polypropylene film of the laminated multi-layer foil of the lateral area or the bottom area comprise isotactic, syndiotactic or atactic polypropylene.

5. A packaging according to any one of the preceding claims, **characterized in that** the oriented polypropylene film or the cast polypropylene film of the laminated multi-layer foil of the lateral area or the bottom area comprise copolymers or block copolymers.

6. A packaging according to any one of the preceding claims, **characterized in that** the softening temperature of the first, third or fourth layer of the laminated multi-layer foil of the lateral area or the bottom area ranges from 120°C to 207°C according to Vicat A 50 (ISO 306).

## Revendications

1. Emballage pour colle thermofusible réactive, comportant au moins une surface latérale et une surface de base qui se confondent de manière continue au moins par zones ou sont reliées ou peuvent être reliées l'une à l'autre au moins par zones, dans lequel au moins une surface latérale ainsi que la surface de base sont formées d'une feuille composite, **caractérisé en ce que** la feuille composite de la surface latérale comporte au moins une première couche comprenant une feuille de polypropylène orientée, au moins une seconde couche comprenant une feuille d'aluminium, et au moins une troisième couche comprenant une feuille de polypropylène coulée, dans lequel la seconde couche est disposée entre la première et la troisième couche; que la feuille composite de la surface de base comporte au moins une première couche comprenant une feuille de polypropylène orientée, au moins une seconde couche comprenant une feuille d'aluminium, et au moins une troisième couche comprenant une feuille de polypropylène coulée, dans lequel la seconde couche est disposée entre la première et la troisième couche; que la troisième couche de la feuille composite de la surface latérale est orientée vers l'intérieur de emballage et la troisième couche de la feuille composite de la surface de base est orientée vers l'extérieur de l'emballage, dans lequel lesdites troisièmes couches de la feuille composite des surfaces latérale et de base sont reliées l'une à l'autre de manière étanche le long d'une zone de recouvrement circulaire et dans lequel la première couche de la feuille composite de la surface latérale et la troisième couche de la feuille composite de la surface de base constituent des couches extérieures; ou comportant au moins une surface latérale et une surface de base qui se confondent de manière continue au moins par zones ou sont reliées ou peuvent être reliées l'une à l'autre au moins par zones, dans lequel au moins une surface latérale ainsi que la surface sont formées d'une feuille composite, **caractérisé en ce que** la feuille composite de la surface latérale comprend au moins une première couche comprenant une feuille de polypropylène orientée, au moins une seconde couche comprenant une feuille d'aluminium, et au moins une troisième couche comprenant une feuille de polypropylène coulée, dans lequel la seconde couche est disposée entre la première et la troisième couche; que la feuille composite de la surface de base comporte au moins une première couche comprenant une feuille de polypropylène coulée, au moins une seconde couche comprenant une feuille d'aluminium, et au moins une troisième couche comprenant une feuille de polypropylène coulée, dans lequel la seconde couche est disposée entre la première et la troisième couche; que la troisième couche de la feuille composite de la surface latérale est orientée vers l'intérieur de l'emballage et la troisième couche de la feuille composite de la surface de base est orientée vers l'extérieur de l'emballage, dans lequel lesdites troisièmes couches de la feuille composite des surfaces latéral et de base sont reliées l'une à l'autre de manière étanche le long d'une zone de recouvrement circulaire et dans lequel la première couche de la feuille composite de la surface latérale et la troisième couche de la feuille composite de la surface de base constituent des couches extérieures.

2. Emballage selon la revendication 1, **caractérisé en ce que** la feuille composite de la surface latérale ou de la surface de base comporte au moins une quatrième couche comprenant une feuille de polyamide et/ou polyimide.

3. Emballage selon la revendication 1 or 2, **caractérisé en ce que** la feuille de polymère orientée de la feuille composite de la surface latérale ou de la surface de base est orientée monoaxialement ou biaxialement.

4. Emballage selon l'une des revendications précédentes, **caractérisé en ce que** la feuille de polypropylène orientée ou la feuille de polypropylène coulée de la feuille composite de la surface latérale ou de la surface de base comportent du polypropylène isotactique, syndiotactique ou atactique.

5. Emballage selon l'une des revendications précédentes, **caractérisé en ce que** la feuille de polypropylène orientée ou la feuille de polypropylène coulée de la feuille composite de la surface latérale ou de la surface de base comportent des copolymères ou copolymères en blocs.

6. Emballage selon l'une des revendications précédentes, **caractérisé en ce que** la température de ramollissement de la première, troisième ou quatrième couche de la feuille composite de la surface latérale ou de la surface de base est comprise entre 120°C et 207°C selon Vicat A 50 (ISO 306).
